# EUROPEAN PATENT SPECIFICATION

(11) **EP 0 723 661 B1**
(45) Date of publication and mention of the grant of the patent: **21.11.2001**
(21) Application number: 94929566.1
(22) Date of filing: 14.10.1994
(51) Int. Cl.: G01N 29/14

(54) **MEASUREMENT METHOD FOR CONTINUOUS MONITORING OF THE CONDITION OF MATERIALS**
MESSVERFAHREN ZUR KONTINUIERLICHEN ÜBERWACHUNG DES ZUSTANDES VON MATERIALIEN
PROCEDE DE MESURE POUR LE CONTROLE EN CONTINU DE L'ETAT DE MATERIAUX

(30) Priority: 14.10.1993 FI 934530
(43) Date of publication of application: 31.07.1996
(73) Proprietor: Pataniitty, Pentti, 33710 Tampere (FI)
(72) Inventor: Pataniitty, Pentti, 33710 Tampere (FI)
(74) Representative: Hakola, Unto Tapani
(86) International application number: FI9400464
(87) International publication number: WO9510772

(56) References cited:
- EP-A- 0 518 508
- GB-A- 1 344 315
- GB-A- 2 132 352
- US-A- 4 024 522
- US-A- 4 207 771
- US-A- 4 531 411
- US-A- 4 685 335
- US-A- 4 738 137

## Description

The present invention relates to a measurement method indicating the structures and condition of materials, which method is based on acoustic emission and makes it possible to detect the changes taking place in the structures of materials starting from a diffusion with a size of one lattice pitch up to a macroscopic crack and to measure them in real time. By means of the method it is possible, by increasing the number of sensors, to subject an entire pressure vessel or container to a real-time condition monitoring, when it is desirable to survey the condition of their structures in respect of cracking and other faults during the use. The field of use of the method includes all materials emitting sound.

By inspection methods nowadays in use, various inspections are performed for pressure vessels and containers at predetermined intervals.
The most common methods are visual inspection and NDT inspections.
Often the regulations and laws define the extent and quality of the inspection which must be carried out. In particular, containers under elevated pressure and those containing hazardous substances are inspected at intervals of ca. 3 to 5 years. Between the inspections, there is usually no kind of condition survey, but surprising explosions and leaks can often take place, resulting in unexpectedly high damages, even losses of human lives. The present inspection methods allow to determine existing construction defects, but their searching, for instance with NDT methods, is laborious and expensive. There are not many possibilities for monitoring the defects. Usually all welded constructions used in the industry contain existing defects which are permitted to a certain extent. The increase in the constructional defects of this kind cannot be surveyed with a sufficient precision during the use load on the construction. New construction defects which often are due to incorrect use situations, nucleate often slowly and in a concealed manner, and their detection by normal inspection methods is difficult.

GB-A-1 344 315 discloses a monitoring system comprising a piezo sensor from which an analog signal corresponding to acoustic emission from the monitored material is filtered and then transferred to a peak detector followed by a level detector at which the peak signal is compared to a preset threshold. The level detector produces a level signal having a period proportional to the amplitude of said peak signal, which level signal is applied to an analog-to-digital converter producing count signals. The data corresponding to said digital count signals is finally stored in a cumulative counter.

The method according to the invention provides a decisive improvement as far as the above-described drawbacks are concerned. For achieving this, a measurement method according to the invention is provided, as set forth in claim 1. Among the most important advantages of the invention can be mentioned the following facts: Materials can be monitored all the time within their whole area in a real-time fashion. The behaviour of the materials can be controlled, and consequently surprising accidents leading to catastrophes can not happen. The repairs can consequently be projected in advance. The use of materials can be optimized by changing use conditions, whereby safer and longer use life is achieved. Direct inspection costs will be considerably diminished, because the object is every moment under survey. Defects in the construction are detected in advance in the beginning, and they can be amended before they grow to a critical level. The method helps also to reveal leaks from containers, thus decreasing emissions to the nature.

In the following, the invention will be described in more detail with reference to the accompanying drawing.

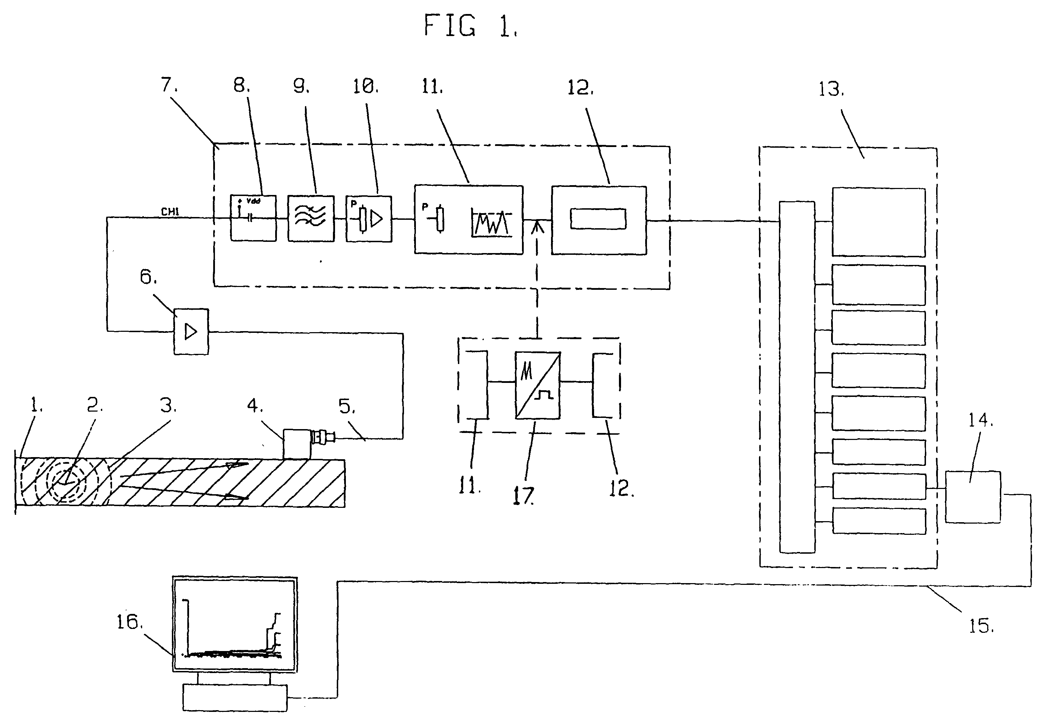

Fig. 1 shows schematically a measurement method where 1 represents the object to be measured, from which elastic sounds are discharged after a defect has occurred in the material. Elastic waves 3 emanating from a crack 2 depicted in the figure are propagated in the material to a piezoelectric sensor 4, where the elastic vibration is transformed into an electric signal, which is passed along a coaxial cable 5 to a preamplifier 6, where the signal is partly filtered and amplified so that electrical disturbances will not interfere with signals travelling in the cable when they are passed to a measuring unit 7. In the measuring unit, the signal is taken in as an analogic signal, from which the power supply and signal are separated by means of a separator 8. The signal is further passed through a filtering stage 9, after which it can still be amplified with an amplifier 10. The threshold voltage of the input of the measuring unit can be adjusted to a desired value using a potentiometer 11, this operation allowing to vary the threshold value of incoming signals in accordance with limits specific to the material, whereby essential data can be registered cumulatively in a counter 12. The counter registers only those current peaks that have exceeded the threshold value. The counter 12 is read by a computer 13, by means of which the data are processed and formed into a file. The files are transmitted by means of a transmission program and using a modem 14 and telephone line 15 to a control computer, which shows the development of emission from each sensor cumulatively as a function of time displayed 16 in real time. The points of study of the output of each sensor are the frequency of occurrence of emission-generated current peaks that have exceeded the threshold value, count/s, and their cumulative sum.

It should be especially noticed that in the measuring method according to the invention, the current impulses coming from the sensor are not converted into a digital form, but they are treated only as an analog signal by means of a filter and an amplifier. Only filtered and restricted material specific data enter the computer processing, and the computer can transmit and construct graphic diagrams for each sensor about the development of emission on a real-time basis. Among different applications of the measuring method of the invention can be mentioned an application where various friction mechanisms such as the condition of slide bearings can be successfully measured through emission. Through a piezo sensor attached to the bearing support, a current impulse is generated at the moment of mutual contact of the bearing surfaces, which results in emission. The current impulses so obtained indicate the contacts of slide surfaces of the bearing in the form of an increase in the counter reading. In this way the condition of the bearing and its state of lubrication can be deduced, and the bearing can be changed according to predetermined criteria.

The invention has been disclosed above only by referring to one of its most advantageous examples. This is, however, by no means intended to be a limitation of the invention to only this example, but many variations are possible within the scope of the inventional ideas defined by the following claims.

The use of a multivibrator 17 between the threshold value control unit 11 and the counter 12 can be mentioned as one advantageous alternative. The function of the multivibrator is known as such, and it is adapted to regulate the frequency of the incoming bursts for ensuring the correct functioning of the counter 12. The multivibrator 17 is adapted to transform the incoming peaks on the triggering principle into a square wave having a certain maximum frequency, for instance 100 kHz. If the incoming bursts have a higher frequency, the "extraneous" peaks do not cause a produce of the square wave. In this way the data entering the counter can be limited.

At the input of the counter 12, the signal is analog, in the case of the multivibrator 17 in the form of square-wave pulses of certain height. The counter 12 counts in this way voltage pulses exceeding the predetermined threshold and originating from the threshold control 11. The computer reads the output of each sensor-specific counter at desired intervals in the form of a BCD number (binary coded decimal), i.e. after the counter 12 the data are processed digitally. In the file of the computer 13 is thereby recorded information about the count value of the counter at predetermined intervals for the survey. Further, it is possible to register the information if the change of the count value has exceeded the predetermined limit, which is the alarm limit. The counters, which each are connected to their respective sensors, can be connected to the same computer 13, each sensor 4 being allotted its own file.

## Claims

1. Measurement method for monitoring of the condition of materials and equipment in a continuous long-term survey during the use of the material under normal use loads, utilizing a previously known property of a piezo sensor that converts a vibration to an electric impulse, where emission, elastic waves caused by changes in the energy fields of materials, especially acoustic emission, is received in the form of electric analog signals according to material-specific properties, the method including the use of a piezo sensor (4), from which the analog signal is passed through a cable (5) to a measuring unit (7), where the analog signal contained in the current signal is filtered with a filter (9), whereafter the signal is transferred to a threshold value control (11), **characterized in that** only the current peaks exceeding the threshold are passed to a cumulative counter (12), which is read at desired intervals to transfer the readings to a computer (13) to form a file, on the basis of which the development of the emission is displayed with an output device (16) on real-time basis, and that the signal to be measured, coming from the piezo sensor (4) is processed all the time in the form of analog information before the counter (12), which counts all pulses exceeding the predetermined threshold, which are read in digital form as count values.

2. Measurement method according to claim 1, **characterized in that** the threshold value control (11) sets the threshold input voltage.

3. Measurement method according to claim 1 or 2, **characterized** in that the analog signal is passed from the piezo sensor (4) through pre-amplifier (6) to the measuring unit (7), where the current signal is separated from the power supply with a separator (8) to form an analog signal entering the processing stage.

4. Measurement method according to any of preceding claims 1 to 3, **characterized in that** the filter (9) is a band pass filter, and the signals that have passed it are amplified with an amplifier (10) before the threshold value control (11).

5. Measurement method according to any of preceding claims 1 to 4, **characterized in that** the frequency of the bursts contained in the signal is adjusted by means of a multivibrator (17) located between the threshold value control (11) and the counter (12).

6. Method according to any of preceding claims 1 to 5, **characterized in that** the data in the file are transmitted from the computer (13) by means of a modem (14) through a data transmission line (15) to a separate output computer serving as an output device (16).

7. Method according to any of preceding claims 1 to 6, **characterized in that** several piezo sensors (4) attached to different points in the object under survey are used, each sensor being allotted its own counter (12) and file.

## Patentansprüche

1. Messverfahren zur Überwachung des Zustandes von Materialien und Ausrüstung im Rahmen einer langfristigen kontinuierlichen Prüfung während der Verwendung der Materialien unter normaler Benutzungsbelastung, unter Verwendung einer bereits bekannten Eigenschaft eines Piezzo-Sensors, der Schwingungen in einen elektrischen Impuls umwandelt, wobei von Änderungen in den Energiefeldern eines Materials verursachte elastische Wellen, insbesondere akustische Emission in der Form von elektrischen Analogsignalen entsprechend materialspezifischen Eigenschaften empfangen wird, wobei das Verfahren die Verwendung eines Piezzo-Sensors (4) enthält, von dem das analoge Signal über ein Kabel (5) an eine Messeinheit (7) weitergeleitet wird, wobei das analoge Signal, das im Stromsignal enthalten ist, mittels eines Filters (9) filtriert wird und anschließend an eine Schwellenwertsteuerung (11) weitergeleitet wird, **dadurch gekennzeichnet, dass** nur die Stromspitzen, die den Schwellenwert überschreiten an einen Summenzähler (12) weitergeleitet werden, der in gewünschten Intervallen gelesen wird, um die gelesenen Daten zum Zweck einer Dateibildung an einen Rechner (13) zu übertragen, wobei auf diese Basis die Entwicklung der Emission mittels einer Ausgabeeinrichtung (16) auf Echtzeitbasis angezeigt wird und dass das zu messende Signal, das von dem Piezzo-Sensor (4) erzeugt wird, kontinuierlich in der Form von Analoginformation mittels des Summenzählers (12) verarbeitet wird, der alle Pulse, die den vorgegebenen Schwellenwert überschreiten, zählt, die in digitaler Form als Zählwerte gelesen werden.

2. Messverfahren nach Anspruch 1, **dadurch gekennzeichnet, dass** die Schwellenwertsteuerung (11) die Eingangsschwellenspannung einstellt.

3. Messverfahren nach Anspruch 1 oder 2, **dadurch gekennzeichnet, dass** das analoge Signal von dem Piezzo-Sensor (4) durch einen Vorverstärker (6) an die Messeinrichtung (7) weitergeleitet wird, wobei das Stromsignal mittels eines Separators (8) von der Stromversorgung getrennt wird, um ein analoges Signal zum Eintritt in die Verarbeitungsstufe zu bilden.

4. Messverfahren nach einem der vorangehenden Ansprüche 1 bis 3, **dadurch gekennzeichnet, dass** das Filter (9) ein Bandfilter ist und das die Signale, die durch das Filter durchfließen, mittels eines Verstärkers (10) vor der Schwellenwertsteuerung (11) verstärkt werden.

5. Messverfahren nach einem der vorangehenden Ansprüche 1 bis 4, **dadurch gekennzeichnet, dass** die Frequenz der im Signal enthaltenen Impulse mittels eines Multivibrators (17) reguliert wird, der zwischen der Schwellenwertsteuerung (11) und dem Zähler (12) angeordnet ist.

6. Verfahren nach einem der vorangehenden Ansprüche 1 bis 5, **dadurch gekennzeichnet, dass** die Daten der Dateien von dem Rechner (13) mittels eines Modems (14) über eine Datenübertragungsleitung (15) an einen separaten Ausgaberechner übertragen werden, der als Ausgabeeinrichtung (16) dient.

7. Messverfahren nach einem der vorangehenden Ansprüche 1 bis 6, **dadurch gekennzeichnet, dass** mehrere Piezzo-Sensoren (4), die an unterschiedlichen Stellen an dem zu prüfenden Objekt angeordnet sind, verwendet werden, wobei jedem Sensor ein eigener Zähler (12) und einen eigene Datei zugeordnet wird.

## Revendications

1. Procédé de mesure pour la surveillance de la condition de matériaux et d'équipements dans une étude continue à long terme au cours de l'utilisation des matériaux sous des charges normales d'utilisation, utilisant une propriété connue au préalable d'un capteur piézoélectrique qui convertit une vibration en une impulsion électrique, dans lequel une émission d'ondes élastiques provoquée par des variations des champs d'énergie des matériaux, spécialement une émission acoustique, est reçue sous la forme de signaux électriques analogiques suivant des propriétés spécifiques au matériau, le procédé consistant à utiliser un capteur piézoélectrique (4), à partir duquel le signal analogique est délivré par l'intermédiaire d'un câble (5) à une unité de mesure (7), où le signal analogique correspondant au signal en courant est filtré par un filtre (9), puis le signal est transféré à une commande (11) à valeur de seuil, **caractérisé en ce que** seules les crêtes de courant dépassant le seuil sont délivrées à un compteur cumulatif (12) qui est lu à intervalles voulus pour transférer les lectures à un ordinateur (13) afin de former un fichier, sur la base duquel le développement de l'émission est visualisé en temps réel par un dispositif de sortie (16) et **en ce que** le signal destiné à être mesuré, provenant du capteur piézoélectrique (4), est traité continuellement sous la forme d'informations analogiques avant le compteur (12), qui compte toutes les impulsions dépassant le seuil prédéterminé, qui sont lues sous forme numérique en tant que valeurs de comptage.

2. Procédé de mesure selon la revendication 1, **caractérisé en ce que** la commande (11) à valeur de seuil établit la valeur d'entrée de seuil.

3. Procédé de mesure selon la revendication 1 ou 2, **caractérisé en ce que** le signal analogique est fourni depuis le capteur piézoélectrique (4) par l'intermédiaire d'un préamplificateur (6) à l'unité de mesure (7), dans laquelle le signal en courant est séparé de l'alimentation électrique par un séparateur (8) afin de former un signal analogique entrant dans l'étage de traitement.

4. Procédé de mesure selon une quelconque des revendications 1 à 3, **caractérisé en ce que** le filtre (9) est un filtre passe-bande et **en ce que** les signaux, qui sont passés dans ce dernier, sont amplifiés par un amplificateur (10) avant la commande (11) à valeur de seuil.

5. Procédé de mesure selon une quelconque des revendications 1 à 4, **caractérisé en ce que** la fréquence des salves contenues dans le signal est ajustée au moyen d'un multivibrateur (17) disposé entre la commande (11) à valeur de seuil et le compteur (12).

6. Procédé de mesure selon une quelconque des revendications 1 à 5, **caractérisé en ce que** les données dans le fichier sont transmises depuis l'ordinateur (13) au moyen d'un modem (14) par une ligne de transmission de données (15) à un ordinateur de sortie séparé servant de dispositif de sortie (16).

7. Procédé de mesure selon une quelconque des revendications 1 à 6, **caractérisé en ce que** plusieurs capteurs piézoélectriques (4), fixés en différents points de l'objet étudié, sont utilisés, chaque capteur se voyant attribuer son propre compteur (12) et son propre fichier.
